(19) **Europäisches Patentamt**

**European Patent Office**

**Office européen des brevets**

(11) **EP 1 410 903 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
**B32B 27/36** (2006.01)      **B32B 27/20** (2006.01)
**C08J 5/18** (2006.01)

(21) Anmeldenummer: **03022591.6**

(22) Anmeldetag: **06.10.2003**

(54) **Mehrschichtige, biaxial orientierte Polyesterfolie, Verfahren zu ihrer Herstellung und ihre Verwendung**

Multilayered biaxially oriented polyester film, method of its preparation and its use

Film de polyester stratifié orienté biaxialement, méthode pour sa production et son utilisation

(84) Benannte Vertragsstaaten:
**DE FR GB IT LU NL**

(30) Priorität: **14.10.2002 DE 10247892**

(43) Veröffentlichungstag der Anmeldung:
**21.04.2004 Patentblatt 2004/17**

(73) Patentinhaber: **Mitsubishi Polyester Film GmbH**
**65023 Wiesbaden (DE)**

(72) Erfinder:
• **Janssens, Bart, Dr.**
**65189 Wiesbaden (DE)**

• **Peiffer, Herbert, Dr. Prof.**
**55126 Mainz (DE)**
• **Hilkert, Gottfried, Dr.**
**55291 Saulheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 903 221**      **EP-A- 0 952 176**
**US-B1- 6 214 440**

**Beschreibung**

Die Erfindung betrifft eine transparente, bevorzugt dreischichtige, biaxial orientierte Polyesterfolie mit einer glatten Oberfläche A, die keine externen Partikel aufweist, und einer rauhen Oberfläche C, die Teilchen in einer definierten Konzentration und in einer definierten Größe enthält. Zur Erzielung einer möglichst hohen Oberflächenglätte der Oberfläche A ist die Folie hochorientiert. Die Folie ist insbesondere für Barrierebeschichtungen geeignet, die nach dem CVD-(Chemical Vapor Deposition) oder nach dem PECVD-Verfahren (Plasma enhanced Chemical Vapor Depostion) aufgebracht werden. Die Erfindung betrifft weiterhin ein Verfahren zur Herstellung der Folie und ihre Verwendung.

Folien mit einer glatten Oberfläche A sind nach dem Stand der Technik bekannt.

So enthalten Folien entsprechend den Beispielen 4 und 6 aus EP-A-0 903 222 in der Oberflächenschicht A keine externen Pigmente. Die Folie hat demzufolge eine glatte Oberfläche A. Entsprechend dort durchgeführter Versuche weist die Folie gute Barrierewerte auf, insbesondere nach der Metallisierung oder der Beschichtung mit keramischen Materialien. Für eine Barrierebeschichtung nach dem CVD- oder nach dem PECVD- Verfahren ist die Glätte der zu beschichtenden Oberfläche A verbesserungsbedürftig. Weiterhin verbesserungsbedürftig ist das Verarbeitungsverhalten der Folie, insbesondere auf schnelllaufenden Maschinen. Die Folie nach den vorgenannten Beispielen 4 und 6 ist auf der der Oberflächenschicht A gegenüberliegenden Oberflächenschicht C nicht hinreichend pigmentiert. Bei der Beschichtung in Hochvakuumanlagen, z.B. in Anlagen, die nach dem CVD- oder nach dem PECVD-Verfahren arbeiten, wird vor der Beschichtung die Anlage evakuiert. Damit entweicht auch die in der Folienrolle enthaltene Luft, wodurch die einzelnen Folienlagen hart aufeinander liegen. Bei einer unzureichenden Pigmentierung kann es zu einem schlechten Laufverhalten der Folie in der Maschine kommen (Schrägzug, Verblocken). Die Wickelqualität der beschichteten Folie ist für die weitere Verarbeitung der Folie (Kaschierung, Bedruckung) ungeeignet.

Die DE-A-16 94 404 beschreibt eine Folie aus Schichten eines orientierten kristallisierbaren thermoplastischen Filmes, wobei mindestens eine der äußeren Schichten einen Zusatz enthält. Die Zusätze sind übliche inerte anorganische oder organische Partikel, die im Falle von inerten Partikeln wie $SiO_2$ in einer Konzentration von 1 bis 25 Gew.-% den äußeren Schichten zugegeben werden. Die Teilchengröße beträgt 2 bis 20 $\mu$m. Diese Schichtstoffe können z.B. für dekorative Zwecke mit Aluminium metallisiert oder für Magnetbänder verwendet werden. In der Schrift finden sich keinerlei Hinweise darauf, wie die Topographie einer solchen Folie für die Verbesserung der Sauerstoffbarriere eingestellt werden kann.

Die DE-A-22 30 970 beschreibt ein magnetisches Aufzeichnungsmedium, das aus einer biaxial orientierten Polyesterfolie und einer dünnen magnetischen metallischen Schicht auf der Oberfläche A der Polyesterfolie besteht. Die Folie ist dadurch gekennzeichnet, dass sie

a) eine beschichtete Oberfläche A enthält, die teilchenfrei ist und

i) mindestens 4 $\mu$m dick ist oder
ii) mindestens 50 % der Dicke der gesamten Folienlage ausmacht; und

b) eine teilchenhaltige zweite Schicht mit verhältnismäßig rauher Oberfläche aufweist, die

i) mindestens 1 % einzelne Teilchen eines bestimmten Polymerisates A und
ii) mindestens 1 % einzelne Teilchen eines bestimmten Polymerisates B enthält.

In der Schrift finden sich wiederum keinerlei Hinweise darauf, wie die Topographie einer solchen Folie für die Verbesserung einer Sauerstoffbarriere eingestellt werden kann.

Die EP-B-0 088 635 beschreibt eine coextrudierte biaxial orientierte Polyesterfolie mit wenigstens zwei Schichten, von denen eine Schicht A aus thermoplastischem Harz besteht, und einer Schicht B, die thermoplastisches Harz und feine Teilchen enthält. Die Folie ist dadurch gekennzeichnet, dass die Oberflächenrauhigkeit $R_a$ der äußeren Oberfläche der Schicht A kleiner als 5 nm ist und die äußere Oberfläche der Schicht B entweder

- eine Oberfläche mit einer Oberflächenrauhigkeit $R_a$ von 5 bis 40 nm ist und eine Vielzahl von Vertiefungen und eine Vielzahl von Vorsprüngen aufweist, die in einer bestimmten Anordnung angeordnet sind, oder
- eine Oberfläche ist, die auf einer ebenen Fläche gebildete Vorsprünge aufweist und deren Oberfläche mit einer Schicht C bedeckt ist, die aus einem Schmiermittel besteht und eine Oberflächenrauhigkeit $R_a$ von 5 bis 40 nm aufweist.

In der EP-A-0 514 129 wird eine transparente Mehrschichtfolie beschrieben, die ein Primärschicht-Substrat aus Polymermaterial umfasst, welches mindestens auf einer seiner Oberflächen eine Sekundärschicht aus Polymermaterial besitzt, die Glasperlen und Siliciumdioxidpartikel in bestimmten Konzentrationen und in bestimmten Größenverteilungen aufweist. Die Sekundärschicht kann auf einer bzw. auf beiden Seiten des Primärschicht-Substrats angeordnet sein. Mit der Folie werden die Trübung und die Verarbeitungseigenschaften verbessert, eine Lehre zur Verbesserung des Glanzes und der Barriereeigenschaften der Folie vermittelt die Schrift jedoch nicht. Auch finden sich in der Schrift keinerlei Hinweise darauf, wie die Topographie einer solchen Folie für die gleichzeitige Verbesserung von Glanz und Sauerstoffbarriere eingestellt werden soll.

In der EP-A-0 604 057 wird eine transparente Mehrschichtfolie beschrieben, die ein Primärschicht-Substrat aus Polymermaterial umfasst, die im wesentlichen frei ist von Füllern, welches mindestens auf einer seiner Oberflächen eine Sekundärschicht aus Polymermaterial besitzt, die als Füller Silikon-Harz in einer Konzentration von 100 bis 1000 ppm enthält und einen mittleren Partikeldurchmesser von 1,5 bis 12,5 $\mu$m aufweist. Nachteilig an den Silikon-Partikeln ist, dass diese vergleichsweise teuer sind und für den Verpackungsmarkt keine akzeptable Lösung darstellen. Außerdem neigen Folien, die mit solchen Pigmenten ausgerüstet sind, beim Wickeln leichter zum Teleskopieren. Ebenfalls finden sich auch in dieser Schrift keinerlei Hinweise darauf, wie die Topographie einer solchen Folie für die gleichzeitige Verbesserung von Glanz und Sauerstoffbarriere eingestellt werden soll.

Die im Stand der Technik beschriebenen Folien sind auf Grund der fehlenden Glätte der zu beschichtenden Oberfläche A für eine Barrierebeschichtung nach dem CVD- oder nach dem PECVD- Verfahren ungeeignet, zu mindestens aber verbesserungsbedürftig. Ebenfalls verbesserungsbedürftig ist das Verarbeitungsverhalten dieser Folien auf diesen Hochvakuumanlagen.

Aufgabe der vorliegenden Erfindung war es, eine transparente, biaxial orientierte Polyesterfolie zur Verfügung zu stellen, die sich insbesondere für eine Barrierebeschichtung nach dem CVD- oder nach dem PECVD- Verfahren eignet. Die Folie soll nach der Barrierebeschichtung mit Substanzen, die bei CVD- oder nach dem PECVD-Verfahren verwendet werden (z.B. Plasmapolymerisation von Hexamethyldisiloxan, $CH_4$), die gewünschte hohe Sauerstoffbarriere aufweisen. Außerdem sollte die Wickelqualität der Folie durch den Beschichtungsvorgang nicht beeinträchtigt werden. Darüber hinaus sollte sich die Folie durch eine gute Herstellbarkeit und Verarbeitbarkeit auszeichnen. Zusammengefasst bestand die Aufgabe darin, eine Folie mit folgender Merkmalkombination zur Verfügung zu stellen:

- Hohe Sauerstoffbarriere (gleichbedeutend mit geringer Sauerstoffpermeation) der Folie nach einer Barrierebeschichtung der Folienoberfläche A nach dem CVD- oder nach dem PECVD- Verfahren (Nutzung der Plasmapolymerisation)
- Gute Herstellbarkeit und gute Verarbeitbarkeit der Folie
- Hoher Glanz der zu beschichtenden Folienoberfläche A (hohe Oberflächenglätte)
- Hohe Transparenz, d.h. geringe Trübung.

Die Folie sollte den bekannten Verpackungsfolien dieser Art in den übrigen Eigenschaften mindestens gleichwertig sein. Sie sollte sich beispielsweise einfach und preiswert herstellen lassen sowie auf den herkömmlichen Maschinen gut verarbeiten lassen.

Gelöst wird die Aufgabe durch eine biaxial orientierte Polyesterfolie, die eine Basisschicht B, die zu mindestens 80 Gew.-% aus einem thermoplastischen Polyester besteht, und zwei Deckschichten A und C aufweist, dadurch gekennzeichnet, dass die Deckschicht A eine hohe Oberflächenglätte hat und keine externen Partikel enthält, wobei der Glanz dieser Deckschicht A > 190 ist (Messwinkel 20°) und die Rauigkeit $R_a$ dieser Deckschicht A $\leq$ 21 beträgt, und die Deckschicht C externe Partikel enthält und eine Anzahl von Erhebungen $N_c$ pro mm$^2$ Folienoberfläche aufweist, die mit ihren jeweilen Höhen h über folgende Gleichung korreliert sind

$$A_{h1} - B_{h1} \cdot \log_{10} h/\mu m \leq \log_{10} (N_C/mm^2) \qquad (1)$$

$0,01 \ \mu m \leq h \leq 1 \ \mu m$

$A_{h1} = 0,05; B_{h1} = 3,3$

Die erfindungsgemäße Folie ist bevorzugt transparent, dreischichtig (Schichtaufbau AB-C) und wird durch Koextrusion hergestellt. Die Oberflächenschicht A enthält bevorzugt keine externen Partikel. Weiterhin weist die Folie eine planare Orientierung $\Delta p$ von größer als 0,163 auf.

Unter Erhebungen im Sinne der vorliegenden Erfindung werden kegelige Erhebungen verstanden, die aus der planar orientierten Folienoberfläche hervorragen.

Erfindungsgemäß ist die Folie bevorzugt dreischichtig. Sie umfasst in jedem Fall als Schichten eine Basisschicht B, eine im Wesentlichen pigmentfreie, hochglänzende Oberflächenschicht A und auf der anderen Seite der Basisschicht B eine weitere Schicht C, bevorzugt aus Polyethylenterephthalat. Diese Schicht C enthält die für die Herstellung und Verarbeitung der Folie förderlichen Pigmente.

Für die verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht B der Folie besteht bevorzugt zu mindestens 80 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure (= Poly1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. anderen Dicarbonsäuren, wie sie auch in den Schichten A oder C vorkommen können.

Bevorzugt besteht die Basisschicht aus PET.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, - C$(CH_3)_2$-, -C$(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen.

Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann nach dem bekannten Umesterungsverfahren erfolgen (siehe Polyesters, V.V. Korshak and S.V. Vinogradova, Pergamon Press, 1965, und Enclyclopedia of Chemical Technology, Fourth Edition, Vol. 19, Pigments to Powders, Handling, Wiley & Sons). Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders geeignet haben sich solche Verfahren erwiesen, bei denen Umesterungskatalysatoren eingesetzt werden, bei denen die Glattheit der Oberfläche A der Folie nur wenig gestört wird. Bevorzugt sind hierbei insbesondere Magnesium- und Mangan- Salze. Diese Umesterungskatalysatoren werden bevorzugt bei der Herstellung des Basisrohstoffes, besonders bevorzugt aber bei der Herstellung des Rohstoffes für die Schicht A verwendet.

Folien mit der geforderten glatten Oberfläche A werden insbesondere dann erhalten, wenn Rohstoffe / Polymere eingesetzt werden, die z.B. unter Verwendung von Mn-, Mg- oder Ca- Umesterungskatalysatoren hergestellt wurden, und bei denen der Mn-Gehalt im Bereich von 50 bis 200 ppm oder der Mg-Gehalt im Bereich von 100 bis 300 ppm oder der Ca-Gehalt im Bereich von 50 bis 300 ppm liegt. Hierdurch werden interne Partikel erzeugt, die zu Folien mit der erfindungsgemäßen Oberfläche ($R_a \leq 21$ nm) führen. Es sind prinzipiell aber auch andere Umesterungskatalysatoren einsetzbar.

Für die Schicht A können prinzipiell die gleichen Polymere verwendet werden, wie für die Basisschicht B. Daneben können in der Schicht A auch andere Materialien enthalten sein, wobei dann die Schicht A bevorzugt aus einem Gemisch von Polymeren, einem Copolymeren oder einem Homopolymeren besteht, welche bevorzugt Ethylen-2,6-naphthalat-Einheiten und/oder Ethylen-terephthalat-Einheiten enthalten. Bis zu 10 Mol-% der Polymere können aus weiteren Comonomeren bestehen, wie sie für die Basisschicht B beschrieben wurden.

Für die andere Schicht (Deckschicht C) können prinzipiell die gleichen Polymere verwendet werden, wie sie zuvor für die Basisschicht B oder die Schicht A beschrieben worden sind.

Für die Verarbeitung der Polymere hat es sich als günstig erwiesen, die Polymere für die Basisschicht und die beiden anderen Schichten so zu wählen, dass sich die Viskositäten der jeweiligen Polymerschmelzen nicht zu sehr unterscheiden. Im anderen Fall ist unter Umständen mit zusätzlichen Unebenheiten, mit Fließstörungen oder mit Streifenbildung auf der fertigen Folie zu rechnen. Zur Beschreibung der Viskositätsbereiche der Schmelzen für die jeweiligen Schichten wird die intrinsische Viskosität IV verwendet. Für handelsübliche Polyethylenterephthalate, die sich bevorzugt zur Herstellung der biaxial orientierten Folien eignen, liegen die IV-Werte im Bereich von 0,54 bis 0,76. Um eine einwandfreie Qualität der Folie im Sinne der vorliegenden Erfindung zu gewährleisten, sollte der SV-Wert der Polymeren für die Schichten A oder C im Bereich von ca. 0,55 bis 0,75, bevorzugt im Bereich von 0,56 bis 0,74, insbesondere bevorzugt im Bereich von 0,57 bis 0,73, liegen. Falls notwendig, kann an den jeweiligen Granulaten eine Festphasenkondensation durchgeführt werden, um die benötigten IV-Werte der Materialien einzustellen. Die IV-Werte der Polymerschmelzen für die Basis- und die beiden Deckschichten sollten sich bevorzugt um nicht mehr als 0,1, vorzugsweise nicht mehr als 0,08, insbesondere aber um nicht mehr als 0,06 IV-Einheiten unterscheiden.

Die Basisschicht B und die beiden anderen Schichten können zusätzlich übliche Additive wie beispielsweise Stabilisatoren enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt.

Die Oberflächenschicht A der Folie nach der vorliegenden Erfindung enthält bevorzugt keine Antiblockmittel. Sie enthält keine externen Partikel. Die Oberflächenschicht C der Folie nach der vorliegenden Erfindung enthält Antiblockmittel in einer bestimmten Konzentration und in einer bestimmten Größe. Die Basisschicht enthält im Wesentlichen nur Antiblockmittel, die über eine Regenerierung der Folie in die Basisschicht eingebracht werden, d.h. wenn z. B. zur Herstellung der Folie Folienverschnitt (Regenerat) mit eingesetzt wird.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Es können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden. Eine detaillierte Beschreibung der einsetzbaren Antiblockmittel findet sich beispielsweise in der EP-A-0 602 964.

Bevorzugte Partikel für die Deckschicht C sind $SiO_2$ in kolloidaler und in kettenartiger Form. Die Partikeldurchmesser der eingesetzten Teilchen sind prinzipiell nicht eingeschränkt. Für die Lösung der Aufgabe hat es sich als günstig erwiesen,

- Teilchen mit einem mittleren Primärpartikeldurchmesser von kleiner als 60 nm, bevorzugt kleiner als 55 nm und besonders bevorzugt kleiner als 50 nm und/oder
- Teilchen mit einem mittleren Primärpartikeldurchmesser (der $d_{50}$-Wert) im Bereich von 1 bis 4 $\mu$m, bevorzugt im Bereich von 1,5 bis 3,5 $\mu$m und besonders bevorzugt im Bereich von 2,5 bis 3,0 $\mu$m, zu verwenden.

Weiterhin hat es sich als besonders günstig erwiesen, wenn die Verteilung des Partikelduchmessers innerhalb bestimmter Grenzen liegt. Zur Erzielung einer möglichst niedrigen Trübung und eines möglichst hohen Glanzes enthält die Deckschicht C der Folie ein Pigmentsystem, bei dem die Streuung des Durchmessers d (ausgedrückt durch den SPAN 98) bevorzugt kleiner als 1,9 ist.

Die Pigmentkonzentration in der Deckschicht C liegt bevorzugt zwischen 0,1 und 0,5 Gew.-%, vorteilhaft zwischen 0,15 und 0,45 Gew.-%, insbesondere zwischen 0,2 und 0,4 Gew.-% und ganz besonders bevorzugt zwischen 0,25 und 0,35 Gew.-%, bezogen auf das Gewicht der Schicht C. Sie richtet sich insbesondere nach dem gewünschten Verarbeitungsverhalten der Folie. Vorzugsweise wird/werden die Pigmentart/en, die Pigmentkonzentration/en und die Partikelkonzentration/en als auch die Schichtdickenverhältnisse so gewählt, dass eine gute Optik, sowie eine gute Herstellbarkeit und Verarbeitbarkeit der Folie gegeben ist. Diese Parameter können durch wenige Vorversuche einfach und sicher bestimmt werden.

Die Pigmente für die Oberflächeschicht C sind in ihrer Größe, Konzentration und in ihrer Verteilung so auszuwählen, dass die Anzahl der Erhebungen $N_C$/mm$^2$ durch folgende Gleichungen beschrieben werden kann (h = Höhe der Erhebungen):

$$A_{h1} - B_{h1} \cdot \log_{10} h/\mu m \leq \log_{10} (N_C/mm^2) \qquad (1)$$

$0,01\ \mu m \leq h \leq 1\ \mu m$

Konstanten $A_{h1}$, $B_{h1}$

|  | $A_{h1}$ | $B_{h1}$ |
|---|---|---|
| erfindungsgemäß | 0,05 | 3,3 |
| bevorzugt | 0,624 | 3,229 |

(fortgesetzt)

|  | $A_{h1}$ | $B_{h1}$ |
|---|---|---|
| besonders bevorzugt | 1,1 | 3,0 |
| ganz besonders bevorzugt | 2,477 | 2,22 |

In einer günstigen Ausführungsform der Erfindung kann die Anzahl der Erhebungen $N_c$/mm$^2$ durch folgende Gleichung (2) beschrieben werden:

$$A_{h1} - B_{h1} \cdot \log_{10} h/\mu m \leq \log_{10}(N_C/mm^2) \leq A_{h2} - B_{h2} \cdot \log_{10} h/\mu m \qquad (2)$$

$0,01\ \mu m \leq h \leq 1\ \mu m$

Konstanten $A_{h1}$, $B_{h1}$, $A_{h2}$, $B_{h2}$

|  | $A_{h1}$ | $B_{h1}$ | $A_{h2}$ | $B_{h2}$ |
|---|---|---|---|---|
| erfindungsgemäß | 0,05 | 3,3 | 4,08 | 1,5 |
| bevorzugt | 0,624 | 3,229 | 4,08 | 1,5 |
| besonders bevorzugt | 1,1 | 3,0 | 4,08 | 1,5 |
| ganz besonders bevorzugt | 2,477 | 2,22 | 4,08 | 1,5 |

Weist die Deckschicht C der Folie nach der vorliegenden Erfindung eine Topographie auf, bei der die Anzahl der Erhebungen unterhalb des durch die Gleichung (1) gekennzeichneten Bereiches fällt, so ist die Herstellung der Folie schwierig und das Verarbeitungsverhalten unzureichend. Die Folie neigt zum Verblocken.

Bei der Folie nach der vorliegenden Erfindung sind die Dicken der Deckschichten A und C im allgemeinen größer als 0,6 $\mu$m und liegen bevorzugt im Bereich von 0,6 bis 2,5 $\mu$m, vorteilhaft im Bereich von 0,7 bis 2,3 $\mu$m, insbesondere im Bereich von 0,8 bis 2,2 $\mu$m und ganz besonders bevorzugt im Bereich von 0,9 bis 2,1 $\mu$m. Die Deckschichten A und C können gleich oder verschieden dick sein.

Die Gesamtdicke der erfindungsgemäßen Polyesterfolie kann innerhalb weiter Grenzen variieren und richtet sich nach dem beabsichtigten Verwendungszweck. Sie beträgt bevorzugt 4 bis 50 $\mu$m, insbesondere 5 bis 45$\mu$m, vorzugsweise 6 bis 40$\mu$m, wobei die Schicht B einen Anteil von vorzugsweise 5 bis 95% an der Gesamtdicke hat.

Zur Herstellung der Schichten A und C (Deckschichten A und C) werden zweckmäßig Polymer-Granulate, bevorzugt aus Polyethylenterephthalat, zwei Extrudern zugeführt. Die Materialien werden bei etwa 300°C aufgeschmolzen und extrudiert bzw. coextrudiert.

Die Polymere für die Basisschicht werden zweckmäßig über einen weiteren Extruder zugeführt. Etwa vorhandene Fremdkörper oder Verunreinigungen lassen sich aus der Polymerschmelze abfiltrieren. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell durchgeführt. Dabei wird vorzugsweise erst in Längsrichtung (d.h. in Maschinenrichtung, MD-Richtung) und anschließend in Querrichtung (d.h. senkrecht zur Maschinenrichtung, TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei ca. 80 bis 130°C und die Querstreckung bei ca. 80 bis 150°C durchgeführt. Das Längsstreckverhältnis liegt bevorzugt im Bereich von 3:1 bis 6:1, insbesondere bei 3,5:1 bis 5,5:1. Das Querstreckverhältnis liegt allgemein im Bereich von 3,0:1 bis 5,0:1, bevorzugt bei 3,5:1 bis 4,5:1.

Die Folie nach der vorliegenden Erfindung wird bevorzugt so orientiert, dass die planare Orientierung $\Delta p$ der Folie größer als 0,163, bevorzugt größer als 0,164 und besonders bevorzugt größer als 0,165 ist. Im anderen Fall ist die Glätte der Oberflächenschicht A für eine Barrierebeschichtung nach dem CVD-Verfahren unter Umständen nicht ausreichend.

Vor der Querstreckung kann man eine oder beide Oberfläche(n) der Folie nach den bekannten Verfahren in-line beschichten. Die In-Line-Beschichtung kann beispielsweise zu einer verbesserten Haftung einer Metallschicht oder einer eventuell aufgebrachten Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von ca. 150 bis 250°C gehalten. Anschließend wird die Folie in üblicher Weise aufgewickelt.

Die biaxial verstreckte und thermofixierte Polyesterfolie kann vor der Bedruckung oder vor dem Aufbringen einer oxidischen Schicht auf einer oder beiden Seite(n) corona- oder flammbehandelt werden. Die Behandlungsintensität wird so gewählt, dass die Oberflächenspannung der Folie im allgemeinen über 45 mN/m liegt.

Zur Einstellung weiterer gewünschter Eigenschaften kann die Folie beschichtet oder corona- bzw. flammvorbehandelt sein. Typische Beschichtungen sind haftvermittelnde, antistatisch, schlupfverbessernd oder dehäsiv wirkende Schichten. Es bietet sich an, diese zusätzlichen Schichten über inline coating mittels wässriger Dispersionen vor der Querverstreckung auf die Folie aufzubringen.

Ein Vorteil der Erfindung besteht darin, dass die Herstellungskosten der erfindungsgemäßen Folie vergleichbar sind mit denjenigen nach dem Stand der Technik. Die sonstigen verarbeitungs- und gebrauchsrelevanten Eigenschaften der erfindungsgemäßen Folie bleiben im Wesentlichen unverändert oder sind sogar verbessert. Daneben ist bei der Herstellung der Folie gewährleistet, dass das Regenerat in einer Konzentration von ca. 20 bis 50 Gew.-%, bezogen auf das Gesamtgewicht der Folie, wieder verwendet werden kann, ohne dass dabei die physikalischen Eigenschaften der Folie nennenswert negativ beeinflusst werden.

Die Folie eignet sich z. B. hervorragend zur Verpackung von licht- und/oder luftempfindlichen Nahrungs- und Genussmitteln. Speziell geeignet ist sie zur Herstellung von Verpackungen für Kaffee, Tee oder Gewürze , insbesondere gemahlenem Kaffee.

Zusammengefasst zeichnet sich die erfindungsgemäße Folie durch eine hervorragende Sauerstoffbarriere, nachdem sie auf der Folienoberfläche A mit Materialien beschichtet worden ist, die bei CVD- oder bei PECVD- Verfahren eingesetzt werden, durch einen hohen Glanz der Folienoberfläche A und durch eine niedrige Trübung aus. Des weiteren besitzt die Folie ein gutes Wickel- und Verarbeitungsverhalten.

Die Folie besitzt eine Sauerstoffpermeation von kleiner als 3,0 $cm^3 \cdot m^{-2} \cdot d^{-1} \cdot bar^{-1}$, vorzugsweise kleiner als 2,5 $cm^3 \cdot m^{-2} \cdot d^{-1} \cdot bar^{-1}$ und besonders bevorzugt kleiner als 2,0 $cm^3 \cdot m^{-2} \cdot d^{-1} \cdot bar^{-1}$, nachdem sie auf der Folienoberfläche A beschichtet worden ist; bevorzugt nach dem CVD- bzw. PECVD-Verfahren.

Substanzen, die nach dem CVD-bzw. PECVD-Verfahren auf die Oberfläche der Deckschicht A aufgebracht werden können, sind z.B. Hexamethyldisiloxan oder $CH_4$, und ein entsprechendes Verfahren ist die AIRCO-Coating Technology, die z.B. von R.J. Nelson auf der Society for the Research of Polymerized Compound Surfaces, Fukui City, Japan, 9. Juli 1993, vorgetragen wurde.

Der Glanz (20°) der Folienoberfläche A ist größer als 190. In einer bevorzugten Ausführungsform beträgt der Glanz dieser Seite mehr als 200 und in einer besonders bevorzugten Ausführungsform mehr als 210. Diese Folienoberfläche eignet sich daneben auch für die Bedruckung oder für die Metallisierung. Der hohe Glanz der Folie überträgt sich auf den Druck oder die aufgebrachte Metallschicht und verleiht somit der Folie das gewollte werbewirksame Aussehen. Die Trübung der Folie ist bevorzugt niedriger als 2,5 %.

Die nachstehende Tabelle (Tabelle 1) fasst die wichtigsten erfindungsgemäßen Folieneigenschaften noch einmal zusammen.

**Tabelle 1**

| | erfindungsgemäßer Bereich | bevorzugt | besonders bevorzugt | ganz besonders bevorzugt | Einheit | Messmethode |
|---|---|---|---|---|---|---|
| Planare Orientierung $\Delta p$ | >0,163 | > 0,164 | > 0,165 | | | |
| Konstanten der Gleichung (1) für die Seite C | $A_{h1}$ = 0,05 $B_{h1}$ = 3,3 | $A_{h1}$ = 0,624 $B_{h1}$ = 3,229 | $A_{h1}$ = 1,1 $B_{h1}$ = 3,0 | $A_{h1}$ = 2,477 $B_{h1}$ = 2,22 | | |
| Sauerstoffpermeation der beschichteten Folie | < 3 | < 2,5 | < 2 | | $cm^3 \cdot m^{2} \cdot d^{-1} \cdot bar^{-1}$ | DIN 53 380, Teil 3 |
| Glanz, Seite A (Messwinkel 20°)[i] | > 190 | > 200 | > 210 | | | DIN 67 530 |
| Trübung[i] | < 2,5 | < 2,0 | < 1,7 | | % | ASTM-D 1003-52 |
| Reibungskoeffizient: C-Seite gegen sich selbst | < 0,45 | <0,42 | < 0,40 | | | DIN 53 375 |
| mittlere Rauhigkeit $R_a$ C-Seite | 30-150 | 40-123 | 50-110 | | nm | DIN 4768, bei einem Cut-off von 0,25 nm |
| mittlere Rauhigkeit $R_a$ A-Seite (i) | 21 | | | | nm | DIN 4768, bei einem Cut-off von 0,25 nm |
| [i] gemessen an der nicht beschichteten Folie | | | | | | |

Zur Charakterisierung der Rohstoffe (Ausgangspolymere) und der Folien wurden die folgenden Methoden benutzt:

DIN = Deutsches Institut für Normung
ASTM = American Society for Testing and Materials
ISO = International Organisation for Standardisation

(1) Bestimmung der planaren Orientierung $\Delta p$

Die Bestimmung der planaren Orientierung erfolgt über die Messung der Brechungsindizes mit einem Abbe-Refraktometer (A. Krüss, Optronic, Hamburg, Deutschland). Die Probenvorbereitung ist wie folgt:

Probengröße und Probenlänge: 60 bis 100 mm
Probenbreite: entspricht Prismenbreite von 10 mm

Zur Bestimmung von $n_{MD}$ und $n_\alpha$ (=$n_z$) muss die zu messende Probe aus der Folie ausgeschnitten werden, bei der die Laufkante der Probe exakt mit der TD-Richtung übereinstimmen muss. Zur Bestimmung von $n_{TD}$ und $n_\alpha$ (=$n_z$) muss die zu messende Probe aus der Folie ausgeschnitten werden, bei der die Laufkante der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23°C hat. Auf das vor der Messung gut gesäuberte untere Prisma wird mit Hilfe eines Glasstabes ein wenig Dijodmethan (n = 1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex $n_\alpha$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_\alpha$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ (senkrecht zur Maschinenrichtung) und $n_\alpha$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

(2) Sauerstoffpermeation

Die Messung der Sauerstoffpermeation an den beschichteten Folien erfolgte mit einem OX-TRAN 2/20 von Mocon Modern Controls (USA) entsprechend DIN 53 380, Teil 3.

(3) SV-Wert (Standard Viskosität) und IV-Wert

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$\mathrm{IV} = [\eta] = 6{,}907 \cdot 10^{-4} \; \mathrm{SV} \; (DCE) + 0{,}063096 \; [dl/g]$$

(4) Reibung

Die Reibung wurde nach DIN 53375 bestimmt. Die Reibung wurde 14 Tage nach der Produktion gemessen. Ein Verblocken findet statt, wenn der Reibwert größer als 1 ist oder bei der Reibkraftmessung in der Reibkraft-Weg-Verlauf Messung Unstetigkeitsstellen auftreten.

(5) Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1°-Spaltblende eingesetzt wurde.

(6) Glanz

Der Glanz wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

(7) Bestimmung der Korngrößen auf Folienoberflächen

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-Imaging System.
Für diese Messungen werden Folienproben flach auf einen Probenhalter aufgebracht. Anschließend werden diese unter einem Winkel $\alpha$ mit einer dünnen Metallschicht (z.B. aus Silber) schräg bedampft. Dabei ist $\alpha$ der Winkel zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.
Die so präparierten Probenoberflächen werden in einem Rasterelektronenmikroskop (REM) abgebildet. Die Schatten der Erhebungen sind infolge des Materialkontrastes der Metalle sichtbar. Die Probe wird im REM so orientiert, dass die Schatten parallel zu einem Bildrand verlaufen. Für die Bildaufnahme werden folgende Bedingungen am REM eingestellt: Sekundärelektronendetektor, Arbeitsabstand: 10 mm, Beschleunigungsspannung: 10 kV und Spot: 4,5. Die Helligkeit und Kontrast werden so eingestellt, dass sämtliche Bildinformationen als Grauwerte dargestellt werden und die Intensität des Grundrauschens so klein ist, dass es nicht als Schatten detektiert wird. Die Länge der Schatten wird mit dem Bildanalyser ausgemessen. Der Schwellwert für die Schattenerkennung wird auf die Stelle gelegt, wo die 2. Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, dass Erhebungen, die im Bild nicht vollständig abgebildet werden, nicht mitgemessen werden. Die Vergrößerung, die Rahmengröße und die Anzahl der ausgewerteten Bilder werden so gewählt, dass insgesamt 0,36 mm$^2$ Folienoberfläche ausgewertet werden.

Die Höhe der einzelnen Erhebungen wird aus den einzelnen Schattenlängen mit folgender Beziehung errechnet:

$$h = \tan(\alpha) \cdot L$$

wobei h die Höhe der Erhebung, $\alpha$ der Bedampfungswinkel und L die Schattenlänge ist. Die so ermittelten Erhebungen werden in Klassen eingeteilt, um zu einer Häufigkeitsverteilung zu kommen. Die Einteilung erfolgt in 0,05 $\mu$m breite Klassen zwischen 0 und 1 $\mu$m, wobei die kleinste Klasse (0 bis 0,05 $\mu$m) für weitere Auswertungen nicht verwendet wird. Die Durchmesser (Ausbreitung senkrecht zur Schattenwurfsrichtung) der Erhebungen werden in ähnlicher Weise in 0,2 $\mu$m breiten Klassen von 0 bis 10 $\mu$m eingestuft, wobei auch hier die kleinste Klasse für die weitere Auswertung nicht verwendet wird.

(8) <u>Rauhigkeit</u>

Die Rauhigkeit $R_a$ der Folie wurde nach DIN 4768 bei einem Cut-off von 0,25 mm bestimmt.

(9) <u>Messung des mittleren Partikeldurchmessers $d_{50}$</u>

Die Bestimmung des mittleren Partikeldurchmessers $d_{50}$ wurde mittels Laser auf einem Malvern MasterSizer (Fa. Malvern Instruments GmbH, Herrenberg, Deutschland) nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.
Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse sofort den gewünschten $d_{50}$-Wert.

(10) <u>Messung der SPAN 98</u>

Die Bestimmung der SPAN 98 wurde mit dem gleichen Messgerat durchgeführt, wie oben bei der Bestimmung des mittleren Durchmessers $d_{50}$ beschrieben. Die SPAN 98 ist dabei wie folgt definiert:

$$SPAN98 = \frac{d_{98} - d_{10}}{d_{50}} \; .$$

Für die Ermittlung von $d_{98}$ und $d_{10}$ wird wiederum die (relative) Summenkurve der Partikelgrößenverteilung zu Grunde gelegt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes der Summenkurve liefert auf der Abszissenachse sofort den gewünschten $d_{10}$-Wert.

Beispiel 1

Chips aus Polyethylenterephthalat (hergestellt nach dem Umesterungsverfahren mit Mn als Umesterungskatalysator, Mn-Konzentration: 100 ppm) wurden bei 160°C auf eine Restfeuchte von unterhalb 50 ppm getrocknet und dem Extruder für die Basisschicht B zugeführt.
Daneben wurden Chips aus Polyethylenterephthalat (hergestellt über das Umesterungsverfahren mit Mn als Umesterungskatalysator, Mn-Konzentration: 100 ppm), ebenfalls bei 160°C auf eine Restfeuchte von unterhalb 50 ppm getrocknet und den jeweiligen Extrudern für die Deckschichten A und C zugeführt. Das Granulat für die Deckschicht A enthält keine externen Pigmente, das Granulat für die Deckschicht C enthält die für die Verarbeitung der Folie förderlichen Pigmente.
Es wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Die Dicke der jeweiligen Schichten ist der Tabelle 2 zu entnehmen.

Deckschicht A, Mischung aus:

100,0 Gew.-%    Polyethylenterephthalat mit einem IV-Wert von 0,616

Basisschicht B:

100,0 Gew.-%    Polyethylenterephthalat mit einem IV-Wert von 0,616

Deckschicht C, Mischung aus:

88,0 Gew.-%    Polyethylenterephthalat mit einem IV-Wert von 0,616

12,0 Gew.-%    Masterbatch aus 98,0 Gew.-% Polyethylenterephthalat und 1,0 Gew.-% Sylobloc® 44 H (Fa. Grace) und 1,0 Gew.-% Aerosil® TT 600 (Fa. Degussa); in beiden Fällen handelt es sich um $SiO_2$.

Die Herstellungsbedingungen in den einzelnen Verfahrensschritten waren:

| Extrusion: | Temperaturen | A-Schicht: | 300°C |
|---|---|---|---|
| | | B-Schicht: | 300°C |
| | | C-Schicht: | 300°C |
| | Düsenspaltweite: | | 1 mm |
| | Temperatur der Abzugswalze: | | 30 °C |
| Längsstreckung: | Temperatur: (Aufheizung 80-115°C, Streckung bei 115°C) | | 80 - 115°C |
| | Längsstreckverhältnis: | | 4,5 |
| Querstreckung: | Temperatur: | | 80 - 155°C |
| | Querstreckverhältnis: | | 4,0 |
| Fixierung: | Temperatur: | | 230°C |
| | Dauer: | | 3 s |

Nach Herstellung der Folie (nach diesem Beispiel 1 und den folgenden Beispielen) wurde diese auf der A-Seite in einem industriellen PE-CVD-Coater mit $SiO_x$ mittels der Plasmapolymerisation von Hexamethyldisiloxan unter Vakuum beschichtet. Die Beschichtungsgeschwindigkeit betrug 5 m/s.

Die Folie hatte die geforderte hohe Sauerstoffbarriere (= niedrige Sauerstoffpermeation). Der Folienaufbau und die erzielten Eigenschaften der hergestellten Folien sind den Tabellen 2 und 3 zu entnehmen.

Beispiel 2

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 μm hergestellt. Im Vergleich zu Beispiel 1 wurde nur die Deckschicht C geändert.

Deckschicht C, Mischung aus:

80,0 Gew.-%    Polyethylenterephthalat mit einem SV-Wert von 800

20,0 Gew.-%    Masterbatch aus 98,0 Gew.-% Polyethylenterephthalat (SV-Wert von 800) und 1,0 Gew.-% Sylobloc® 44 H (Fa. Grace) und 1,0 Gew.-% Aerosil® TT 600 (Fa. Degussa)

Die Verfahrensbedingungen für die Folie waren für alle Schichten wie in Beispiel 1 gewählt.

Vergleichsbeispiel 1 (VB 1)

Es wurde das Beispiel 1 aus der EP-A-0 514 129 nachgearbeitet. Die wie in Beispiel 1 gecoatete 75 μm dicke Folie hat nicht die geforderte Sauerstoffpermeation. Der Glanz der Folie ist nicht zufriedenstellend.

Vergleichsbeispiel 2 (VB 2)

Es wurde das Beispiel 1 aus der EP-A-0 604 057 nachgearbeitet. Die wie in Beispiel 1 gecoatete 60 μm dicke Folie hat nicht die geforderte Sauerstoffpermeation. Der Glanz der Folie ist nicht zufriedenstellend.

**Tabelle 2**

| Beispiel | Foliendicke (μm) | Folienaufbau | Schichtdicken A B C (μm) | Pigmente in den Schichten A | B | C | mittlerer Pigmentdurchmesser A | B | C (μm) | Pigmentkonzentrationen A | B | C (ppm) |
|---|---|---|---|---|---|---|---|---|---|---|---|---|
| Beispiel 1 | 12 | ABC | 1,0/9,5/1,5 | keine | keine | Sylobloc 44H Aerosil TT 600 | | | 2,5 0,04 | 0 0 | 0 0 | 1200 1200 |
| Beispiel 2 | 12 | ABC | 1,0/9,5/1,5 | keine | keine | Sylobloc 44H Aerosil TT 600 | | | 2,5 0,04 | 0 0 | 0 0 | 2000 2000 |
| VB1 | 75 | ABA | 4/67/4 | Glasperlen + Aerosil Ox50 | keine | Glasperlen + Aerosil Ox50 | 2,7 0,04 | | 2,7 0,04 | 300 1200 | 0 0 | 300 1200 |
| VB2 | 60 | ABA | 1,5/57/1,5 | Tosperl130 | keine | Tosperl130 | 3,0 | | 3,0 | 600 | 0 | 600 |

**EP 1 410 903 B1**

**Tabelle 3**

| Beispiele | Konstanten für die Höhenverteilung der Partikel $A_h$ $B_h$ C-Seite | Sauerstoffpermeation $cm^3/(m^2 \cdot bar \cdot d)$ | Reibung C/C | Planare Orientierung $\Delta p$ | Rauhigkeit $R_a$ C-Seite nm | Rauhigkeit $R_a$ (i) A-Seite nm | Glanz[i] (20°) A-Seite | Trübung[i] % | Verarbeitungsverhalten |
|---|---|---|---|---|---|---|---|---|---|
| Beispiel 1 | $A_{h1}$=0,65 $B_{h1}$=3,0 | 0,5* | 0,38 | 0,166 | 60 | 20 | 200 | 1,7 | sehr gut |
| Beispiel 2 | $A_{h1}$=1,2 $B_{h1}$=2,9 | 0,5* | 0,35* | 0,167 | 65* | 20 | 200 | 1,9* | sehr gut |
| VB1 | | 3,5 | 0,46 | | 35 | | 160 | 1,3 | |
| VB2 | | 4,0 | 0,26 | | 55 | | 165 | 0,6 | |

[i] gemessen an der nicht beschichteten Folie

A-Seite: beschichtete Deckschicht mit $SiO_x$, Schichtdicke: 30 nm

C-Seite: unbeschichtete Deckschicht

* Korrektur: Nachmessung 07.07.03

**Patentansprüche**

1. Biaxial orientierte Polyesterfolie, die eine Basisschicht B, die zu mindestens 80 Gew.-% aus einem thermoplastischen Polyester besteht, und zwei Deckschichten A und C aufweist, **dadurch gekennzeichnet, dass** die Deckschicht A eine hohe Oberflächenglätte hat und keine externen Partikel enthält, wobei der Glanz dieser Deckschicht A >190 ist (Messwinkel 20°) und die Rauigkeit $R_a$ dieser Deckschicht A ≤21 beträgt und die Deckschicht C externe Partikel enthält und eine Anzahl von Erhebungen $N_c$ pro $mm^2$ Folienoberfläche aufweist, die mit ihren jeweiligen Höhen h über folgende Gleichung korreliert sind:

$$A_{h1} - B_{h1} \cdot \log_{10} h/\mu m \leq \log_{10} (N_C/mm^2) \qquad (1)$$

$0{,}01\ \mu m \leq h \leq 1\ \mu m$
$A_{h1} = 0{,}05;\ B_{h1} = 3{,}3.$

2. Polyesterfolie nach Anspruch 1, **dadurch gekennzeichnet, dass** der Polyester der Basisschicht B Einheiten aus Ethylenglykol und Terephthalsäure und/oder Einheiten aus Ethylenglykol und Naphthalin-2,6-dicarbonsäure enthält.

3. Polyesterfolie nach Anspruch 1 oder 2, **dadurch gekennzeichnet, dass** als Polyester der Basisschicht B Polyethylenterephthalat verwendet wird.

4. Polyesterfolie nach einem oder mehreren der Ansprüche 1 bis 3, **dadurch gekennzeichnet, dass** die Deckschicht C als externe Partikel Antiblockmittel oder Pigmente enthält.

5. Polyesterfolie nach einem oder mehreren der Ansprüche 1 bis 4, **dadurch gekennzeichnet, dass** die Deckschicht C als Antiblockmittel $SiO_2$ enthält.

6. Polyesterfolie nach einem oder mehreren der Ansprüche 1 bis 5, **dadurch gekennzeichnet, dass** die externen Partikel der Deckschicht C einen mittleren Primärpartikeldurchmesser von kleiner als 60 nm und/oder einen mittleren Primärpartikeldurchmesser von 1 bis 4 $\mu m$ aufweisen.

7. Polyesterfolie nach einem oder mehreren der Ansprüche 1 bis 6, **dadurch gekennzeichnet, dass** die Deckschicht C die externen Partikel in einer Konzentration von 0,1 bis 0,5 Gew.-% enthält, bezogen auf das Gewicht der Schicht C.

8. Polyesterfolie nach einem oder mehreren der Ansprüche 1 bis 7, **dadurch gekennzeichnet, dass** die Folie eine planare Orientierung von größer als 0,163 aufweist.

9. Polyesterfolie nach einem oder mehreren der Ansprüche 1 bis 8, **dadurch gekennzeichnet, dass** die unbeschichtete Oberflächenschicht A einen Glanz (20°) von größer als 200 aufweist.

10. Polyesterfolie nach einem oder mehreren der Ansprüche 1 bis 9, **dadurch gekennzeichnet, dass** die Folie einen Schichtaufbau A-B-C hat.

11. Polyesterfolie nach einem oder mehreren der Ansprüche 1 bis 10, **dadurch gekennzeichnet, dass** die auf der Deckschicht A nach dem CVD-oder PECVD-Verfahren beschichtete Folie eine Sauerstoffpermeation von kleiner als 3 $cm^3/(m^2 \cdot bar \cdot d)$ aufweist.

12. Polyesterfolie nach einem oder mehreren der Ansprüche 1 bis 11, **dadurch gekennzeichnet, dass** die Folie auf der Deckschicht A mit plasmapolymerisiertem Hexamethyldisiloxan oder $CH_4$ beschichtet ist.

13. Verfahren zur Herstellung einer Polyesterfolie nach einem oder mehreren der Ansprüche 1 bis 12 umfassend die Schritte

    a) Herstellen einer mehrschichtigen Folie durch Extrusion bzw. Koextrusion und Ausformen der Schmelzen zu flachen Schmelzefilmen
    b) biaxiales Strecken der Folie und
    c) Thermofixieren der gestreckten Folie

14. Verwendung einer Polyesterfolie nach einem oder mehreren der Ansprüche 1 bis 12 zur Verpackung von luft- und/oder lichtempfindlichen Nahrungs- und Genussmitteln.

**Claims**

1. A biaxially oriented polyester film having a base layer B, which is composed of at least 80% by weight of a thermoplastic polyester, and having two outer layers A and C, wherein the outer layer A has high surface smoothness and comprises no external particles, the gloss of said outer layer A being > 190 (measurement angle 20°) and the roughness $R_a$ of said outer layer A being $\leq 21$, and the outer layer C comprises external particles and has, per mm$^2$ of film surface area, a number $N_c$ of elevations whose respective heights h are correlated via the following equation:

$$A_{h1} - B_{h1} \bullet \log_{10} h/\mu m \leq \log_{10}(N_c/mm^2) \qquad (1)$$

$0.01\ \mu m \leq h \leq 1\ \mu m$
$A_{h1} = 0.05$; $B_{h1} = 3.3$.

2. The polyester film as claimed in claim 1, wherein the polyester of the base layer B contains units of ethylene glycol and terephthalic acid, and/or units of ethylene glycol and naphthalene 2,6-dicarboxylic acid.

3. The polyester film as claimed in claim 1 or 2, wherein the polyester used in the base layer B comprises polyethylene terephthalate.

4. The polyester film as claimed in one or more of claims 1 to 3, wherein the external particles present in the outer layer C comprise antiblocking agents or pigments.

5. The polyester film as claimed in one or more of claims 1 to 4, wherein the antiblocking agents present in the outer layer C comprise $SiO_2$.

6. The polyester film as claimed in one or more of claims 1 to 5, wherein the external particles of the outer layer C have an average primary particle diameter smaller than 60 nm and/or an average primary particle diameter of from 1 to 4 $\mu m$.

7. The polyester film as claimed in one or more of claims 1 to 6, wherein the outer layer C comprises the external particles at a concentration of from 0.1 to 0.5% by weight, based on the weight of the layer C.

8. The polyester film as claimed in one or more of claims 1 to 7, wherein the planar orientation of the film is greater than 0.163.

9. The polyester film as claimed in one or more of claims 1 to 8, wherein the gloss (20°) of the uncoated surface layer A is greater than 200.

10. The polyester film as claimed in one or more of claims 1 to 9, which has an A-B-C layer structure.

11. The polyester film as claimed in one or more of claims 1 to 10, wherein the film coated on the outer layer A by the CVD or PECVD process has an oxygen permeation smaller than 3 cm$^3$/(m$^2$·bar·d).

12. The polyester film as claimed in one or more of claims 1 to 11, the outer layer A of which has been coated, using plasma-polymerized hexamethyldisiloxane or $CH_4$.

13. A process for producing a polyester film as claimed in one or more of claims 1 to 12, encompassing the steps of

    a) producing a multilayer film by extrusion or coextrusion and shaping the melts to give flat melt films
    b) stretching the film biaxially, and
    c) heat-setting the stretched film.

14. The use of a polyester film as claimed in one or more of claims 1 to 12 for the packaging of foods or other consumable products which are sensitive to air and/or to light.

**Revendications**

1. Film de polyester orienté biaxialement, comportant une couche de base B qui est constituée à raison d'au moins 80 % en poids d'un polyester thermoplastique et deux couches de recouvrement A et C, **caractérisé en ce que** la couche de recouvrement A a un grand lissé de la surface et ne contient aucune particule externe, le brillant de cette couche de recouvrement A étant > 190 (angle de mesure 20°) et la rugosité $R_a$ de cette couche de recouvrement A étant $\leq 21$, et la couche de recouvrement C contient des particules externes et présente par $mm^2$ de surface du film un nombre de saillies $N_c$ qui sont en corrélation avec leurs hauteurs respectives h par l'équation suivante :

$$A_{h1} - B_{h1} \cdot \log_{10} h/\mu m \leq \log_{10} (N_c/mm^2) \qquad (1)$$

$0,01 \ \mu m \leq h \leq 1 \ \mu m$
$A_{h1} = 0,05 \ ; \ B_{h1} = 3,3.$

2. Film de polyester selon la revendication 1, **caractérisé en ce que** le polyester de la couche de base B contient des motifs éthylèneglycol et acide téréphtalique et/ou des motifs éthylèneglycol et acide naphtalène-2,6-dicarboxylique.

3. Film de polyester selon la revendication 1 ou 2, **caractérisé en ce qu'**on utilise du poly(éthylène-téréphtalate) en tant que polyester de la couche de base B.

4. Film de polyester selon une ou plusieurs des revendications 1 à 3, **caractérisé en ce que** la couche de recouvrement C contient des agents anti-adhérence de contact ou des pigments, en tant que particules externes.

5. Film de polyester selon une ou plusieurs des revendications 1 à 4, **caractérisé en ce que** la couche de recouvrement C contient du $SiO_2$ en tant qu'agent anti-adhérence de contact.

6. Film de polyester selon une ou plusieurs des revendications 1 à 5, **caractérisé en ce que** les particules externes de la couche de recouvrement C présentent un diamètre moyen de particules primaires de moins de 60 nm et/ou un diamètre moyen de particules primaires de 1 à 4 $\mu m$.

7. Film de polyester selon une ou plusieurs des revendications 1 à 6, **caractérisé en ce que** la couche de recouvrement C contient les particules externes à une concentration de 0,1 à 0,5 % en poids, par rapport au poids de la couche C.

8. Film de polyester selon une ou plusieurs des revendications 1 à 7, **caractérisé en ce que** le film présente une orientation planaire supérieure à 0,163.

9. Film de polyester selon une ou plusieurs des revendications 1 à 8, **caractérisé en ce que** la couche superficielle A non revêtue présente un brillant (20°) supérieure à 200.

10. Film de polyester selon une ou plusieurs des revendications 1 à 9, **caractérisé en ce que** le film a une structure de couches A-B-C.

11. Film de polyester selon une ou plusieurs des revendications 1 à 10, **caractérisé en ce que** le film revêtu sur la couche de recouvrement A selon le procédé CVD ou PECVD présente une perméation à l'oxygène de moins de 3 $cm^3/m^2$.bar.d).

12. Film de polyester selon une ou plusieurs des revendications 1 à 11, **caractérisé en ce que** le film est revêtu sur la couche de recouvrement A avec $CH_4$ ou de l'hexaméthyldisiloxane polymérisé par plasma.

13. Procédé pour la fabrication d'un film de polyester selon une ou plusieurs des revendications 1 à 12, comprenant les étapes suivantes

a) préparation d'un film multicouche par extrusion ou coextrusion et mise en forme des masses fondues à la sortie en films plats extrudés
b) étirage biaxial du film et
c) thermofixage du film étiré.

**14.** Utilisation d'un film de polyester selon une ou plusieurs des revendications 1 à 12, pour le conditionnement de produits alimentaires et d'autres produits de consommation, sensibles à l'air et/ou à la lumière.